Europäisches Patentamt

European Patent Office

Office européen des brevets

(11) Publication number: **0 351 998**
**A1**

## (12) EUROPEAN PATENT APPLICATION

(21) Application number: **89306990.6**

(22) Date of filing: **10.07.89**

(30) Priority: **18.07.88 US 220739**

(43) Date of publication of application:
**24.01.90 Bulletin 90/04**

(84) Designated Contracting States:
**DE ES FR GB IT SE**

(51) Int. Cl.⁴: **H02K 3/20**

(71) Applicant: **CENTURY ELECTRIC INC.**
**1881 Pine Street P.O. Box 187**
**St. Louis Missouri 63166(US)**

(72) Inventor: **Sisk, Hollis D.**
**329 Ridgemeadow Drive**
**Chesterfield Missouri 63107(US)**

(74) Representative: **Dummett, Thomas Ian Peter**
**et al**
**Dummett Copp & Co. 14 The Square**
**Martlesham Heath Ipswich Suffolk, IP5**
**7SL(GB)**

(54) Multi-piece amortisseur winding end plate.

㊗ An end plate for a squirrel cage amortisseur
winding is made from four angular segments, each
of the segments being of the same shape and size,
the segments having portions thereof cut out along
the annular inner surface and the outer edges to
accommodate close nesting of the angular segments
across both the width and length of a sheet of raw
material from which the segments are to be cut so to
minimize waste as the segments are cut therefrom.

FIG. 2.

FIG. 3.

EP 0 351 998 A1

## MULTI-PIECE AMORTISSEUR WINDING END PLATE

The present invention relates to a multi-piece amortisseur winding end plate, notably one for use in a synchronous electric motor.

### BACKGROUND TO THE INVENTION

Typically, a squirrel cage amortisseur winding is built into the rotor for a synchronous dynamoelectric machine in order to start it and bring it up close to synchronous speed. In one design, the rotor is designed from laminations which are axially aligned and stacked, the laminations having pole pieces around which wire is wrapped to form the field windings on the rotor. In the pole pieces, a series of axially aligned holes are provided for the insertion of conductor bars which form the cage portion of the squirrel cage amortisseur winding. At each end of the lamination stack, end plates are mounted to the rotor which are electrically conductive and which are welded or otherwise secured to the conductor bars to electrically connect them to complete the electrical circuit of the winding. In the prior art, these end plates are typically cast aluminum or the like. Some prior art designs are of plate-type construction similar to a lamination. However, they are all onepiece designs.

One such design in the prior art which has been used by the assignee of the present invention is a one-piece end plate which is approximately 13" in diameter and which is formed by plasma torch cutting a 4' x 8' sheet of aluminum alloy 1100. The 4' x 8' pre-formed sheets are the industry standard and they are made from 99% pure aluminum. Recently, the price of these sheets has escalated quite dramatically such that there is a significant amount of money in wasted material caused by laying out the one-piece, circular end plates in routine fashion across the 4' width of a standard sheet. As is apparent, three full end plates may be laid across the width of the plate, but that leaves 9" of waste material at one side of the plate. Additionally, there is waste throughout the length of the plate as seven 13" diameter end plates can be laid out in an 8' dimension which leaves 5" of waste. While some small portion of this waste can be saved by strategically positioning the circular end plates across the face of the plate, there is still quite a significant amount of waste due to the fact that the diameter of the end plate does not accommodate close spacing of the end plates to the edge of the sheet in either the width or length dimension.

To reduce these and other problems in the prior art, we have devised a multi-piece end plate for an amortisseur winding which generally consists of a number, typically four, angular segments, each segment being shaped substantially the same so that they can be assembled to form the end plate.

Furthermore, and perhaps more significantly, we have designed the segments such that a non-functional portion of the segment lies at each edge of its width, thereby permitting the edges to be removed, for example lopped off or cropped, to fit within a smaller envelope of space. This enables the segments to be aligned and nested with one another so that they can be lined up across the width of an industry standard sized plate to occupy the full width of the plate. This dramatically reduces the amount of waste over that created by cutting out in the prior art one-piece circular design. Furthermore, as only a non-functional portion of each segment is eliminated, this does not interfere with the electrical operation of the end plate. Functionally, the purpose of the end plate is to electrically connect the conductor bars forming the squirrel cage amortisseur winding. These conductor bars are positioned generally apart from a radially extending centre line through each pole piece of the end plate. Thus, a substantially triangular portion of the outer edge at this centre line of each pole plate can be eliminated as no conductor bars are joined to the end plate in that location.

To further reduce waste, part of the annular collar which surrounds the motor shaft is cut way such that as the segments are lined up along the length dimension of the sheet, the pole pieces of the adjoining segment overlap these annular portion cutaways. With this technique, the segments may be placed even closer together along the length of the plate which helps minimize waste in the length dimension of a standard 4' x 8' sheet.

In order to facilitate assembly of four segments into a single end plate, a tab is formed along the radial centre line of each pole piece which interfits into a slot in an adjacent segment, the adjacent segments may then be staked or welded to join them and thereby form a single piece end plate assembly.

### SUMMARY OF THE INVENTION

Accordingly, the present invention provides an amortisseur winding for a dynamoelectric machine, said amortisseur winding including a plurality of conductor bars physically connected to and extending between a pair of axially spaced end plates, said end plates being electrically conductive so as electrically to couple said conductor bars, characterised in that at least one of said end plates is comprised of a plurality of generally arcuate segments assembled into a disc-like member, portions of said segments located at or adjacent at least one edge of the segments being cut away so as to permit a plurality of said segments to be nested together in series so that the overall total dimension of the series can be adjusted, so as to minimize waste as a plurality of said segments are laid out and formed from a sheet of raw material of pre-determined dimensions.

The invention also provides a segment for use in the assembly of a disc-like member for use in the amortisseur of the invention, which segment is characterised in that it comprises a generally annular planar portion having a co-planar pole portion projecting radially outward from each end of the annular portion, said segments being configured so that adjacent segments are adapted to nest with one another so that the pole portions of one segment substantially abut the annular portion of an adjacent segment thereby minimizing waste as a plurality of said segments are laid out and formed from a sheet of material of predetermined dimensions.

While the principal advantages and features of the invention have been explained above, a fuller understanding of the invention may be attained by referring to the drawings and description of the preferred embodiment which follow.

Brief Description of the Drawings

Figure 1 is an isometric view of a rotor of a dynamoelectric machine having an amortisseur winding and an end plate in accordance with the present invention;

Figure 2 is a top view of the rotor of Figure 1 further detailing the multi-piece end plate assembled and mounted on a rotor; and

Figure 3 is a layout of end plate segments detailing the close interfitting between adjacent segments which is possible with the design of the present invention.

Detailed Description of the Preferred Embodiment

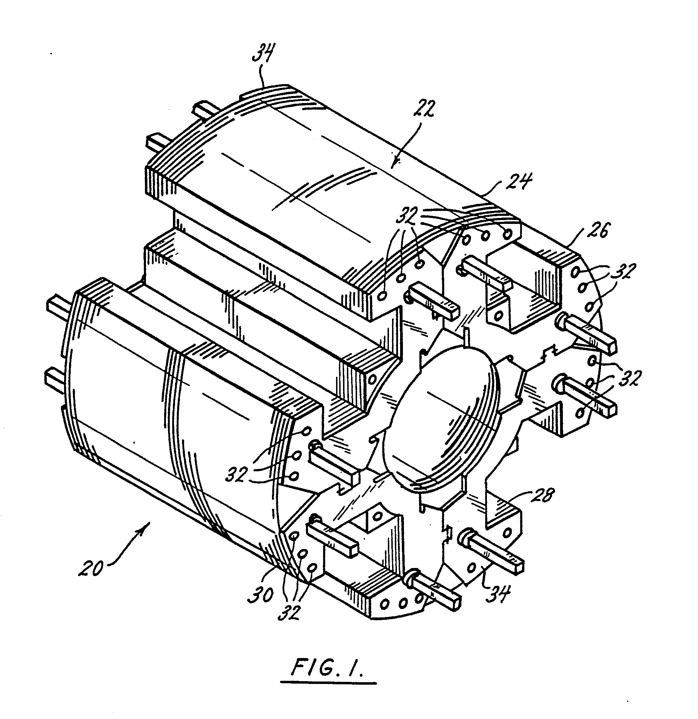

A rotor 20 for a synchronous dynamoelectric machine is shown in Figure 1 and generally includes a core 22 made from a plurality of laminations stacked axially, the rotor core 22 having four pole pieces 24, 26, 28, 30 around which wire is wrapped (not shown) to form the field coils. Through each pole piece 24-30, six conductor bars 32 extend in an axial direction through the core 22 to form the squirrel cage amortisseur winding, as is well known in the art. At each end of the core 22 is an end plate 34 of the present invention which is formed from a plurality of segments.

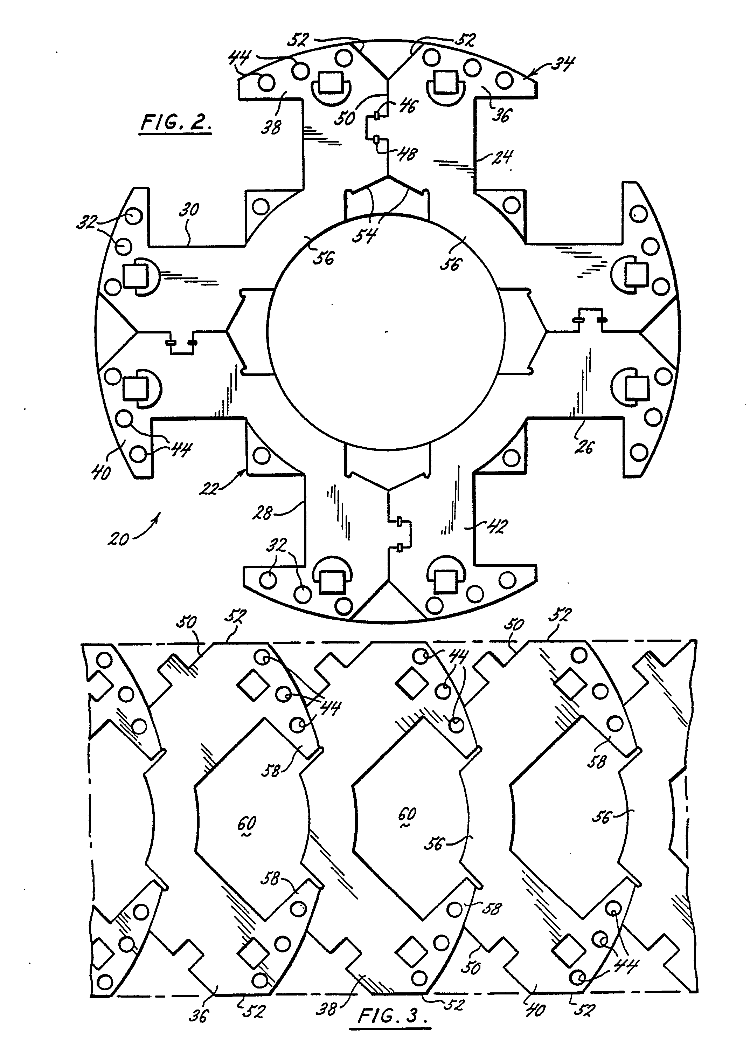

The end plate 34 is shown in greater detail in Figures 2 and 3. As shown therein, each end plate 34 is formed from four angular segments 36, 38, 40, 42, each of which extends through a 90° arc of the 360° circle formed by the end plate 34. Each of these angular segments 36-42 has a plurality of holes 44 through which the conductor bars 32 extend and are welded thereto. This secures the conductor bars 32 both mechanically and electrically to the end plate 34. Adjacent segments such as 36, 38 are assembled together by stakes 46, 48, or the segments may be welded along the radial joint 50 formed between them. For purposes explained below, a triangular portion or cutout 52 is formed at the outer end of each angular segment 36-42, these triangular portions 52 being non-functional in that the holes 44 to secure the end plate 34 to conductor bars 32 are all contained within the remaining portions of each angular segment 36-42. Additionally, along the inner end of the radially extending edges 50 an annular portion 54 has been removed for purposes explained below, while still another annular portion 56 is used to form the edge which abuts the motor or generator shaft.

As best shown in Figure 3, the angular segments 36-42 are all of substantially the same shape and may be oriented as shown for forming, with pole pieces 58 extending into the annular cutouts 54 and abutting the next adjacent angular segment. Thus, by removing the annular portions or cutouts 54, adjacent segments 36, 38 may be moved closer together to thereby minimize the waste material 60 remaining between them along their length dimension. Additionally, the triangular cutouts 52 are formed along the width dimension of each angular segment 36, 38, 40, 42 such that the envelope defined by the dotted line drawn along the edge of the array of angular segments may be adjusted to make it possible for an even multiple of the envelopes to fit across the width or length dimension of a standard sheet of raw material. As can be appreciated by viewing Figure 3, the holes 44 all remain within the pattern such that the triangular portions 52 are comprised of substantially non-functional pieces of the angular segments 36, 38, 40, 42. Therefore, depending upon the particular frame size and machine size, the widths of the envelope size shown in Figure 3 can be adjusted. This represents a substantial saving in material over that which would be wasted by cutting the end plates 34 in one piece.

There are various changes and modifications which may be made to the invention as would be apparent to those skilled in the art. However, these changes or modifications are included in the teaching of the disclosure, and it is intended that the invention be limited only by the scope of the claims appended hereto.

## Claims

1. An amortisseur winding for a dynamoelectric machine, said amortisseur winding including a plurality of conductor bars physically connected to and extending between a pair of axially spaced end plates, said end plates being electrically conductive so as electrically to couple said conductor bars, characterised in that at least one of said end plates (34) is comprised of a plurality of generally arcuate segments (36, 38, 40, 42) assembled into a disc-like member (34), portions (52, 54) of said segments (36, 38, 40, 42) located at or adjacent at least one edge (50, 56) of the segments being cut away so as to permit a plurality of said segments to be nested together in series so that the overall total dimension of the series can be adjusted, so as to minimize waste as a plurality of said segments are laid out and formed from a sheet of raw material of predetermined dimensions.

2. An amortisseur as claimed in claim 1 characterised in that each segment (36, 38, 40, 42) includes a portion containing a plurality of holes (44) for receiving and securing the conductor bars (32).

3. An amortisseur as claimed in either of claims 1 or 2 characterised in that each segment (36, 38, 40, 42) has substantially radially extending edges (50) along which adjacent segments are joined to form the disc-like member (34), the cut away portions (52) comprising generally triangularly shaped portions (52) located at or adjacent the radially outward end of said radially extending edge (50).

4. An amortisseur as claimed in any one of the preceding claims characterised in that cut away portions (52) are located at opposing sides (50) of each segment (36, 38, 40, 42) so that the width of the segment may be adjusted at either or both sides thereof.

5. An amortisseur as claimed in any one of the preceding claims characterised in that each segment (36, 38, 40, 42) in the assembled disc-like member (34) is of substantially the same shape.

6. An amortisseur as claimed in claim 5 characterised in that four segments (36, 38, 40, 42) are used to form the disc-like member (34).

7. An amortisseur as claimed in any one of the preceding claims characterised in that each of said segments (36, 38, 40, 42) includes a generally annular portion (56) having a pole portion (58) projecting radially outward from each end of the annular portion (56), said segments (36, 38, 40, 42) being configured so that adjacent segments are adapted to nest with one another so that the pole portions (58) of one segment substantially abut the annular portion (56) of an adjacent segment thereby minimizing waste as a plurality of said segments are laid out and formed from a sheet of material of pre-determined dimensions.

8. An amortisseur as claimed in claim 7 characterised in that said annular portion (56) is configured with a pair of cutouts (54) whereby said abutting pole portions (58) can extend into said cutouts (54) as the adjacent segments (36, 38, 40, 42) are nested.

9. A segment for use in the assembly of a disc-like member for use in the amortisseur as claimed in any one of the preceding claims characterised in that the segment (36, 38, 40, 42) comprises a generally annular planar portion (56) having a co-planar pole portion (58) projecting radially outward from each end of the annular portion (56), said segments (36, 38, 40, 42) being configured so that adjacent segments (36, 38, 40, 42) are adapted to nest with one another so that the pole portions (58) of one segment substantially abut the annular portion (56) of an adjacent segment thereby minimizing waste as a plurality of said segments are laid out and formed from a sheet of material of pre-determined dimensions.

FIG. 1.

_FIG. 2._

_FIG. 3._

<br>

European Patent Office

**EUROPEAN SEARCH REPORT**

Application Number

EP 89 30 6990

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-878829 (SIEMENS-SCHUCKERTWERKE) <br> * page 1, lines 47 - 83; figures 1, 2. * | 1, 9. | H02K3/20 |
| A | PATENT ABSTRACTS OF JAPAN <br> vol. 5, no. 91 (E-61)(763) 13 June 1981, <br> & JP-A-56 35646 (NIPPON DENSO) <br> * the whole document * | 1, 5, 7, 9. | |
| A | US-A-4365180 (LICATA ET AL) <br> * column 2, line 51 - column 4, line 53; figures 1-3. * | 1-3, 5, 8, 9. | |
| A | FR-A-876198 (OERLIKON) <br> * page 1, lines 32 - 44; figure 2. * | 1, 9. | |

TECHNICAL FIELDS SEARCHED (Int. Cl.5 )

H02K

The present search report has been drawn up for all claims

| Place of search | Date of completion of the search | Examiner |
|---|---|---|
| THE HAGUE | 22 SEPTEMBER 1989 | TIO K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)